Europäisches Patentamt

(19) European Patent Office

Office européen des brevets

(11) Numéro de publication: **0 193 470**
**B1**

(12) **FASCICULE DE BREVET EUROPÉEN**

(45) Date de publication du fascicule du brevet:
**12.07.89**

(21) Numéro de dépôt: **86400413.0**

(22) Date de dépôt: **26.02.86**

(51) Int. Cl.⁴: **H 04 M 1/72,** H 04 M 17/02

(54) **Appareil téléphonique à borne fixe et combiné mobile.**

(30) Priorité: **26.02.85 FR 8502759**

(43) Date de publication de la demande:
**03.09.86 Bulletin 86/36**

(45) Mention de la délivrance du brevet:
**12.07.89 Bulletin 89/28**

(84) Etats contractants désignés:
**BE CH DE GB IT LI NL SE**

(56) Documents cité:
**EP-A-0 115 240**
**DE-A-2 947 164**
**DE-B-2 845 348**
**DE-C-1 226 650**

(73) Titulaire: **Le Cheviller, Jean- Pierre, 5, rue Leredde,**
**F-75013 Paris (FR)**
Titulaire: **Duquesne, Jean, 32, rue La Fontaine,**
**F-75016 Paris (FR)**
Titulaire: **Dupuy, René, 50, avenue Victor Cresson,**
**F-92130 Issy- les- Moulineaux (FR)**

(72) Inventeur: **Le Cheviller, Jean- Pierre, 5, rue**
**Leredde, F-75013 Paris (FR)**
Inventeur: **Duquesne, Jean, 32, rue La Fontaine,**
**F-75016 Paris (FR)**
Inventeur: **Dupuy, René, 50, avenue Victor**
**Cresson, F-92130 Issy- les- Moulineaux (FR)**

(74) Mandataire: **Martinet & Lapoux, 62, rue des**
**Mathurins, F-75008 Paris (FR)**

## Description

La présente invention concerne un appareil téléphonique comprenant une borne fixe reliée à une ligne téléphonique et un combiné téléphonique, la borne fixe comprenant des premiers moyens de modulation et le combiné comprenant des premiers moyens de démodulation pour transmettre des premiers signaux à audiofréquence de la ligne téléphonique vers un écouteur du combiné, et le combiné comprenant des seconds moyens de modulation et la borne fixe comprenant des seconds moyens de démodulation pour transmettre des seconds signaux à audiofréquence d'un microphone du combiné vers la ligne téléphonique.

Un tel appareil téléphonique est utilisé principalement en tant qu'appareil téléphonique public, en vue de remédier aux principaux inconvénients des appareils téléphoniques publics à prépaiement par pièce ou par carte magnétique, holographique ou à mémoire. Les inconvénients sont notamment la possibilité de manipuler des pièces mécaniques susceptibles d'être arrachées, telles que cadran ou clavier de numérotation et combiné téléphonique, la possibilité d'obstruer des orifices d'introduction de pièce ou de carte en vue d'interdire un quelconque prépaiement de communication téléphonique, et la gestion des recettes encaissées nécessitant la présence d'une caissette de monnaie dans l'appareil et un relevage périodique de celle-ci lorsque des communications sont payées au moyen de pièces, ou la vente de carte de crédit de prépaiement par des distributeurs déterminés lorsque des communications sont prépayées par carte.

Dans un appareil téléphonique public du genre défini ci-dessus, par exemple divulgué par la demande de brevet européen EP-A-0 115 240, des moyens de modulation à haute fréquence et des moyens de démodulation à haute fréquence inclus dans la borne fixe sont reliés respectivement à des moyens de démodulation à haute fréquence et des moyens de modulation à haute fréquence inclus dans le combiné, par une liaison infrarouge bidirectionnelle pour échanger des signaux numériques de parole et de signalisation entre la borne et le combiné. Outre l'inconvénient que l'usager doit maintenir son combiné pointé vers deux transducteurs opto-électroniques encastrés dans le plafond d'une cabine téléphonique contenant la borne fixe pendant toute la durée d'une communication téléphonique, la liaison infrarouge peut être perturbée soit par coupure due au passage d'un corps étranger, soit par déplacement du combiné, ce qui interrompt la communication téléphonique en cours. Par ailleurs, le combiné possède une alimentation autonome, telle que piles, et les transducteurs opto-électroniques contribuent à augmenter le coût du combiné et de la borne fixe. Le combiné présente également de nombreuses fonctions, telles que mémorisation de numéros d'appel et de numéros de secret d'usager, et de réception d'impulsions de taxe, ce qui augmente encore le coût de l'appareil et la complexité du combiné.

Selon d'autres types d'appareils, offrant des inconvénients analogues à ceux par la liaison infrarouge, tels que décrit dans la demande de brevet allemand DE-A-2 947 164, la liaison infrarouge est remplacée par une liaison à fréquence radio permettant des échanges de signaux à haute fréquence dans une gamme de 100 MHz entre combiné et borne fixe distants de plusieurs mètres. Notamment dans le combiné, une puissance élevée est nécessaire, ce qui contribue à augmenter le coût du combiné par une batterie à charge élevée. Les transmetteurs et récepteurs à haute fréquence aussi bien dans la borne fixe que dans le combiné nécessitent des transpositions à fréquence intermédiaire, et en outre, sont combinés à des modems pour moduler et démoduler des signaux à modulation par codage d'impulsions MIC. Ceci augmente encore le coût et la complexité du combiné qui doit être considéré comme un produit bon marché et de grande diffusion.

La présente invention a pour but de remédier aux inconvénients précédents et notamment de fournir un appareil téléphonique du genre défini dans l'entrée en matière dans lequel la liaison entre la borne fixe et le combiné n'offre pas de risques de perturbation et le combiné est moins onéreux et complexe que ceux selon la technique antérieure.

A cette fin, un appareil téléphonique selon l'invention est tel que défini dans la revendication 1.

En pratique, les moyens de couplage sont du genre transformateurs de tension à basse fréquence ayant chacun deux enroulements mis à proximité immédiate et l'un en face de l'autre. De préférence, chacun des moyens de couplage comprend une bobine de couplage disposée derrière une face isolante de la borne fixe et une bobine de couplage disposée dans un bloc d'adaptation relié au combiné par un cordon flexible de fils de liaison et applicable contre la borne fixe. Le maintien du bloc d'adaptation contre la borne fixe est réalisé, par exemple, grâce à un élément magnétique contenu dans le bloc d'adaptation coopérant avec un aimant ou un électro-aimant contenu dans la borne fixe. Ceci évite toute perturbation externe dans la transmission de signaux de parole et de tonalité via les moyens de couplage.

Selon une autre caractéristique de l'invention, la borne fixe comprend des moyens pour transmettre une tension d'alimentation continue au combiné à partir d'une source d'alimentation de la borne, le combiné comprend des moyens alimentant les premiers moyens de démodulation et les seconds moyens de modulation pour récupérer la tension d'alimentation continue, et les moyens pour transmettre et récupérer ladite tension d'alimentation sont reliés par des troisièmes moyens de couplage magnétique à basse fréquence. Le combiné prélève l'énergie d'alimentation à partir de la borne fixe ce qui ne nécessite aucune recharge ou aucun remplacement d'une batterie de pile dans le combiné. En outre, la téléalimentation du combiné par la borne fixe permet de vérifier la présence du combiné plaqué contre la borne fixe, en vue de prendre la ligne téléphonique. Cette vérification est obtenue grâce à une détection d'un signal "de présence de combiné" délivré par les seconds moyens de démodulation faisant suite à l'émission d'une porteuse à basse fréquence par les seconds moyens de modulation et donc à une téléalimentation du combiné à travers les troisièmes moyens de couplage.

En pratique, la borne fixe offre une face verticale complètement plane derrière laquelle affleurent notamment des bobines de couplage, une touche de prise et de libération de ligne, des touches de clavier de numérotation et un afficheur de numéro. La borne fixe ne présente ainsi aucune aspérité et aucun orifice pouvant faire l'objet d'un quelconque vandalisme.

D'autres caractéristiques et avantages de la présente invention apparaîtront plus clairement à la lecture de la description suivante d'une réalisation préférée de l'invention en référence aux dessins annexés correspondants dans lesquels:

- la Fig. 1 est un bloc-diagramme d'une borne fixe et d'un combiné mobile d'un appareil téléphonique selon l'invention;
- la Fig. 2 montre en détail des circuits de téléalimentation, de modulation et de démodulation dans la borne fixe;
- la Fig. 3 montre en détail des circuits d'alimentation, de démodulation et de modulation dans le combiné; et
- la Fig. 4 montre schématiquement le combiné muni d'un bloc d'adaptation plaqué convenablement contre une face verticale de la borne fixe.

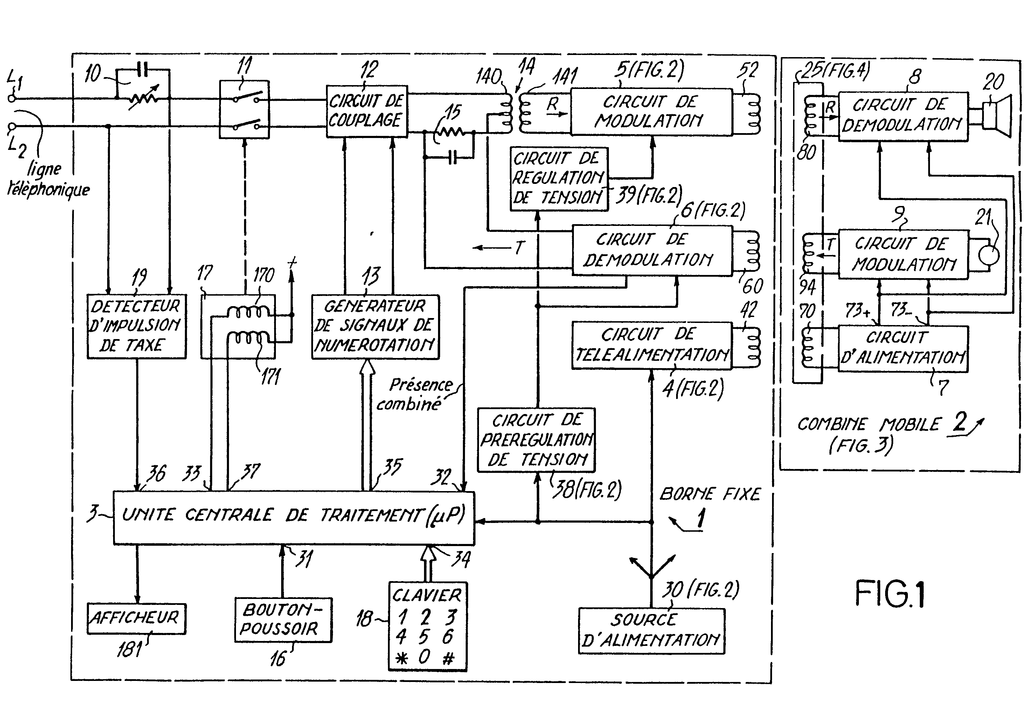

Un appareil téléphonique public selon l'invention comprend une borne fixe 1 et un combiné téléphonique mobile et détachable 2. La borne fixe est d'abord décrite en référence à la Fig. 1.

La borne 1 est reliée à un central téléphonique de rattachement (non représenté) à travers une ligne téléphonique à deux fils $L_1$ et $L_2$. Dans la borne 1, on retrouve des circuits et composants d'un poste téléphonique classique, tels qu'un circuit d'adaptation de ligne 10 monté en série dans le fil $L_1$, un contact de fermeture ou deux contacts de fermeture 11 montés respectivement en série dans les fils $L_1$ et $L_2$, jouant le rôle de crochet-commutateur, un circuit de couplage 12 couplant la ligne téléphonique $L_1$ $L_2$ à un générateur de signaux de numérotation 13, un transformateur différentiel 14 partageant la ligne téléphonique en une voie de réception de premiers signaux de parole R à coupler à un écouteur 20 du combiné 2 et une voie de transmission de seconds signaux de parole T à coupler 3 un microphone 21 du combiné, et un équilibreur de ligne 15 terminant la ligne. Un enroulement primaire 140 du transformateur 14 est relié en série avec l'équilibreur 15. Des entrées de la voie de réception R sont constituées par des bornes d'un enroulement secondaire 141 du transformateur 14. Des sorties de la voie de transmission T sont constituées par un point milieu de l'enroulement primaire 140 et d'une borne de l'équilibreur 15 reliée au fil $L_2$ via le circuit de couplage 12 et l'un des contacts 11.

Différentes phases d'une communication téléphonique sont gérées et controlées par unité centrale de traitement 3 comprenant essentiellement un microprocesseur. La borne fixe 1 est alimentée par une source d'alimentation générale 30 qui fournit une tension continue typiquement de 24 volts à partir du secteur électrique ou d'une batterie d'accumulateur, cette dernière pouvant servir, selon une autre variante, comme batterie tampon de secours en cas d'interruption du secteur. L'unité de traitement 3 est fabriquée en technologie CMOS afin de réduire la consommation électrique de la borne. La borne fixe 1 comprend également un bouton-poussoir à contact 16 qui enfoncé, commande classiquement un décrochage, un relais bistable 17 ayant deux enroulement 170 et 171 pour commander les contacts 11, un clavier de numérotation à 12 touches 18, et un détecteur d'impulsion de taxe 19 pour détecter des impulsions de taxe modulées à 50 kHz ou 12 kHz susceptibles d'être transmises par le central téléphonique pendant l'établissement d'une communication téléphonique.

Une mise en service de la borne fixe 1 est obtenue par un usager en appuyant sur le bouton-poussoir 16 qui déclenche le fonctionnement de l'unité centrale 3 par une borne d'entrée 31. Comme on le verra dans suite, l'unité 3 commande la prise de la ligne téléphonique après avoir vérifié le couplage convenable du combiné téléphonique 2 à la borne 1 grâce à la détection d'un signal "de présence d'un combiné" délivré par la voie de transmission T vers une borne d'entrée 32 de l'unité 3. La prise de ligne est déclenchée par la mise à zéro d'une borne de sortie 33 de l'unité 3 qui excite le premier enroulement 170 du relais 17 pour fermer les contacts 11 et ainsi simuler un décrochage.

En réponse à une tonalité d'invitation à numéroter reçue par l'écouteur 20 du combiné vis la voie de réception R, l'usager compose différents numéros sur le clavier 18. Pour une communication taxée, la phase de numérotation comprend successivement:

- la composition d'un numéro prédéterminé, tel que "10", sur le clavier 18 pour indiquer au central de rattachement que la communication à établir est taxée;
- la transmission d'un numéro de carte de télécommunication possédée par l'usager, ce numéro indiquant un compte d'abonnement de l'usager;
- la transmission d'un numéro de code secret identifiant l'usager ; et

- un numéro d'appel d'un abonné demandé sur le clavier 18.

Les différents numéros sont par exemple délivrés sous forme numérique par un codeur du clavier 18 à un bus d'entrée 34 de l'unité 3 qui les mémorisent dans une mémoire vive et les retransmet par un bus de sortie 35 au générateur de signaux de numérotation 13. En particulier, l'unité 3 ne commande pas la prise de ligne lorsque le numéro prédéterminé "10" n'est pas le premier composé. Selon le type du central de rattachement, les signaux de numérotation sont transmis par le générateur 13 sous la forme de trains d'impulsions ou de signaux à multifréquence. Si, suite à la tonalité d'invitation à numéroter, le central de rattachement ne reconnaît pas le numéro prédéterminé 10, le central délivre dans la ligne $L_1L_2$ une impulsion de taxe qui est détectée par le détecteur 19. Le détecteur 19 demande à l'unité 3 de libérer la ligne $L_1L_2$ via une borne d'entrée 36. Cette libération est obtenue en appliquant un "0" à une borne de sortie 37 de l'unité 3 activant le second enroulement 171 du relais 17 ce qui ouvre les contacts 11 et simule un raccrochage.

Après détection du numéro prédéterminé "10", l'usager communique à une opératrice située au central de rattachement le numéro de compte d'abonnement inscrit sur la carte de télécommunication, puis le numéro de code secret afin que l'opératrice vérifie la concordance du numéro de compte avec le numéro de code et, dans l'affirmative, impute le coût de la communication au débit du compte de l'usager qui sera indiqué sur une facture téléphonique bimestrielle reçue par l'usager. Dans le cas où il n'y a pas concordance, l'opératrice coupe et n'établit pas la communication et le central transmet une impulsion de taxe vers la borne fixe 1 pour libérer la ligne, comme décrit plus haut. Selon une autre variante, le numéro de compte et le numéro de code peuvent être composés sur le clavier 18 et transmis par le générateur 13 à travers la ligne $L_1L_2$; le central téléphonique vérifie alors automatiquement la concordance entre le numéro de compte et le numéro de code, et en cas de discordance, transmet une impulsion de taxe vers le détecteur 19. Dans tous les cas, en fin de communication, le central téléphonique retransmet vers un ordinateur d'un centre éloigné de gestion de facturation, le numéro de compte de l'usager et le nombre de taxes débitées et/ou le coût de la communication en vue d'établir une facture bimestrielle de l'usager.

Pour une communication non taxée, correspondant par exemple à un numéro d'appel de service des réclamations ou d'un service urgent, police ou pompiers, le numéro d'appel à deux chiffres est seulement composé sur le clavier 18 après réception de la tonalité d'invitation à numéroter. Dans ce cas, l'unité 3 valide ce numéro d'appel et inhibe toute détection d'impulsion de taxe signalée par le détecteur 19.

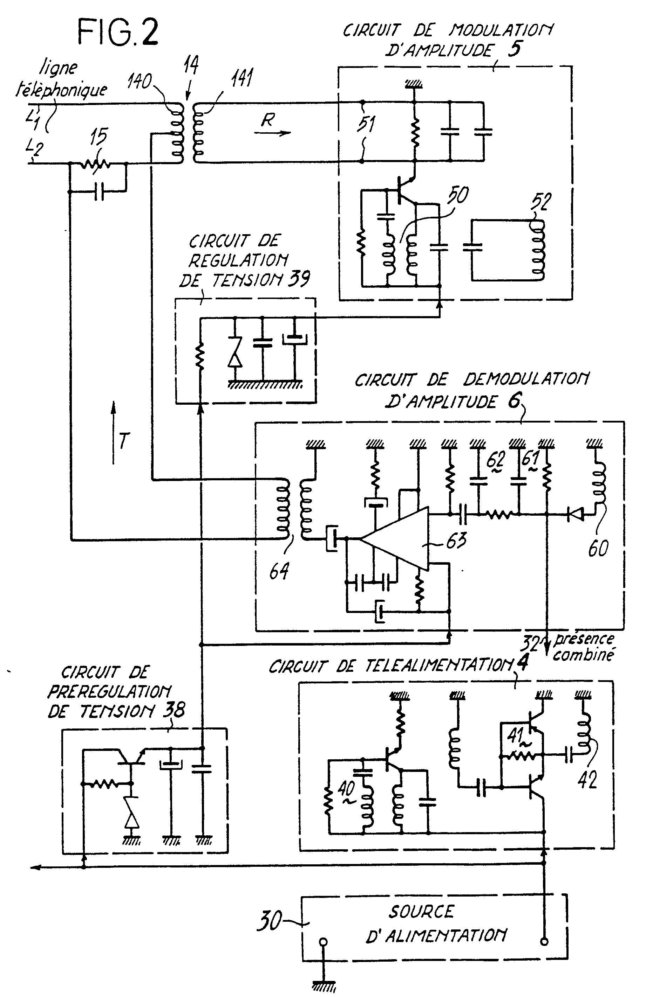

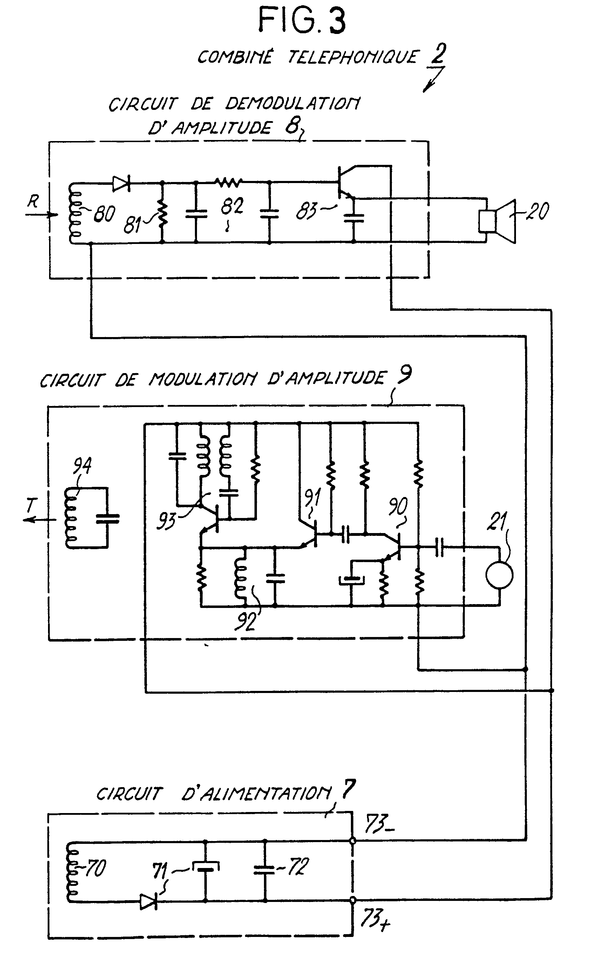

En se référant maintenant aux Figs. 2 et 3, on décrit en détail les voies de réception et de transmission R et T ainsi que le couplage du combiné 2 à la borne fixe 1.

Comme montré à la Fig. 2, la borne 1 comprend un circuit de téléalimentation 4, un circuit de modulation d'amplitude 5 dans la voie de réception R, et un circuit de démodulation d'amplitude 6 dans la voie de transmission T. Comme montré à la Fig. 3, le combiné 2 comprend un circuit d'alimentation 7, un circuit de démodulation d'amplitude 8 dans la voie de réception R et un circuit de modulation d'amplitude 9 dans la voie de transmission T.

Le circuit 4 (Fig. 2) est destiné à téléalimenter le combiné téléphonique 2 au moyen d'une porteuse à une fréquence basse prédéterminée de 100 kHz. Le circuit 4 comprend un oscillateur du type Hartley 40 alimenté directement par la source d'alimentation 30. La porteuse à 100 kHz est amplifiée par un circuit pseudo push-pull série à transistors bipolaires complémentaires 41 puis transmise au combiné 2 par une bobine de couplage magnétique 42. La porteuse à 100 kHz est captée par une bobine de couplage magnétique 70 et détectée par un circuit redresseur à simple alternance classique à diode et condensateur 71 dans le circuit 7 (Fig. 3) du combiné. La porteuse à 100 kHz redressée charge un condensateur 72 en sortie du circuit 7, faisant office de réservoir d'énergie. Les bornes du condensateur 72 constituent des bornes d'alimentation de tension continue récupérée $73_+$ et $73_-$ pour alimenter les circuits 8 et 9 dans le combiné 2.

Dans la borne fixe 1 (Figs. 1, 2), le circuit de modulation 5 est alimenté par la source 30 via un circuit de prérégulation de tension 38 et un circuit de régulation de tension 39, et le circuit de démodulation 6 est alimenté par la source 30 via le circuit de prérégulation de tension 38. Le circuit 38 fournit une puissance plus élevée pour que le circuit 6 transmette convenablement les signaux de parole vers la ligne téléphonique $L_1L_2$. Il comprend classiquement un transistor bipolaire ballast à base reliée à une diode de Zener, et en sortie, un condensateur de filtrage et un condensateur tampon. Le circuit de régulation 39 stabilise la tension d'alimentation à une tension relativement faible grâce à un circuit à diode de Zener et résistance, et comprend en sortie, un condensateur de filtrage et un condensateur de découplage.

Selon une autre variante plus simple, mais offrant moins de sécurité contre des fraudes, les circuits 4 et 7 peuvent être supprimés, et le circuit 7 peut être remplacé par une source de tension autonome du combiné, telle que piles ou accumulateurs miniatures.

Dans la voie de réception R, des signaux à audiofréquence tels que des signaux de tonalité transmis par le central de rattachement et des signaux de parole transmis par l'abonné demandé modulent une porteuse de réception à basse fréquence de 200 kHz. La porteuse de réception est obtenue au moyen d'un oscillateur du type Hartley 50 inclus dans le circuit 5 alimenté par le circuit de régulation 39 (Fig. 2). Une entrée de filtrage à basse fréquence 51 du circuit 5 reçoit les signaux de tonalité et de parole à travers l'enroulement secondaire 141 du transformateur différentiel 14. Une sortie du circuit 5 est constituée par une bobine de couplage 52 transmettant la porteuse de réception modulée en amplitude vers le combiné 2. Dans le circuit de démodulation d'amplitude 8 (Fig. 3) du combiné 1, une bobine de couplage 80 capte la porteuse de réception modulée qui est démodulée dans un circuit de détection 81. Les signaux à basse fréquence détectés par le circuit 81 sont filtrés par un filtre passe-bas 82, puis amplifiés dans un circuit d'amplification 83 ayant pour charge l'écouteur 20.

Dans le circuit de modulation d'amplitude 9 (Fig. 3), le microphone 21 délivre des signaux de parole à deux étages d'amplification 90 et 91. Les signaux de parole amplifiés sont appliqués à une entrée de filtrage à basse fréquence 92 d'un circuit accordé comprenant un oscillateur du type Hartley 93 délivrant une porteuse de transmission à basse fréquence de 250 kHz.

Une bobine de couplage 94 en sortie du circuit 9 émet la porteuse de transmission modulée en amplitude par les signaux de parole microphoniques vers une bobine de couplage 60 en entrée du circuit 6 dans la borne fixe 1. Dans le circuit de démodulation d'amplitude 6 (Fig. 2), un circuit de détection classique 61 et un filtre passe-bas 62 restituent les signaux de parole microphoniques. Une sortie du circuit de détection 61 est relié à la borne d'entrée 32 de l'unité centrale 3 afin de signaler un couplage magnétique du combiné 2 à la borne 1, c'est-à-dire une téléalimentation des circuits 8 et 9 du combiné par la source 30 via les circuits 4 et 7 ; comme déjà dit, cette surveillance de la téléalimentation traduisant la "présence d'un combiné" contre la borne 1 permet de valider la prise de la ligne $L_1L_2$ lorsque le bouton 16 est enfoncé au début de l'établissement d'une communication téléphonique.

Dans le circuit de démodulation 6, les signaux microphoniques détectés et filtrés sont amplifiés par un amplificateur-suiveur 63 comprenant un amplificateur opérationnel alimenté par le circuit de prérégulation de tension 38, avant d'être transmis dans la ligne $L_1L_2$ à travers un transformateur d'isolement 64 de rapport égal à l'unité.

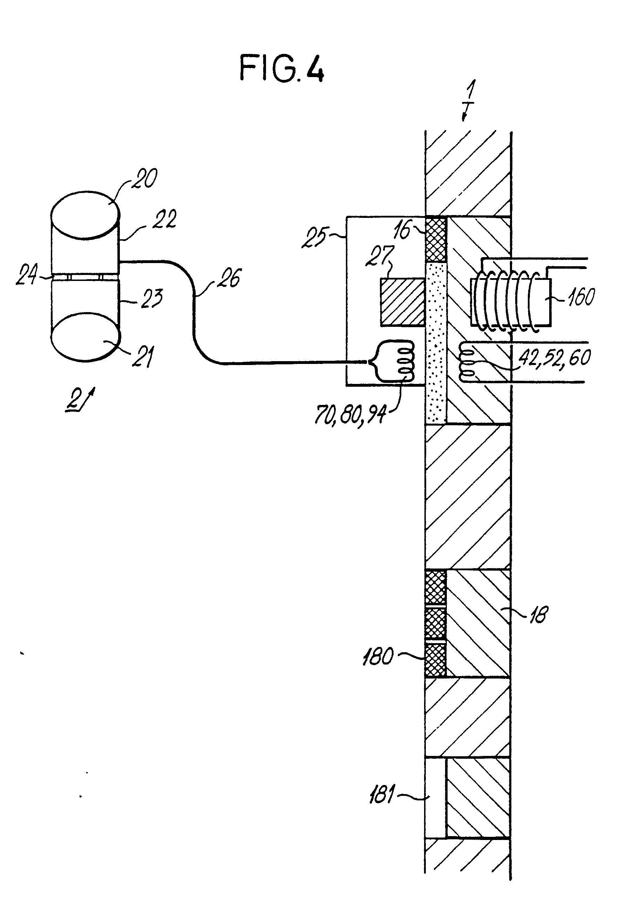

Comme montré schématiquement à la Fig. 4 selon une réalisation préférée, le combiné 2 est constitué par un petit boîtier pliant formé par deux demi-boîtiers 22 et 23 rabattables l'un sur l'autre grâce à une charnière souple en matière plastique 24. Lorsque le boîtier est fermé, les demi-boîtiers 22 et 23 offrent en regard l'écouteur 20 et le microphone 21 à travers des faces internes ajourées. Le boîtier contient tous les composants électroniques des circuits 7, 8 et 9 à l'exception des bobines de couplage magnétique 70, 80 et 94 qui sont inclus dans un bloc d'adaptation 25 raccordé au boîtier de combiné à travers un cordon flexible de fils conducteurs de liaison 26. Le bloc d'adaptation 25 contient également un élément magnétique 27.

Par ailleurs, la borne fixe 1 présente une face complètement lisse formant, en pratique, une paroi verticale d'une cabine téléphonique publique ou une portion de façade d'un bâtiment. Sur cette paroi est indiquée une plaque en matière isolante, telle que matière plastique résistante, ayant un pourtour analogue à une section du bloc d'adaptation 25 afin que l'usager applique le bloc 25 contre la borne 1. Le bloc 25 est ainsi maintenu grâce à un aimant inclus dans la paroi verticale derrière le cadre et attirant l'élément magnétique 27. L'aimant peut être remplacé par un électro-aimant 160 activé lorsque le bouton 16 est enfoncé. Dans le cadre précité est également inclus le bouton-poussoir 16 constitué par une touche capacitive. Ainsi, dès que le bloc d'adaptation 25 est appliqué contre la borne fixe 1, les bobines 42 et 70, 52 et 80, 60 et 94 sont couplées magnétiquement, et en particulier, le combiné 2 est téléalimenté. L'unité centrale 3 détecte ainsi la "présence du combiné" par la borne 32, et une demande de prise de ligne par la borne 31 établie par la touche capacitive 16 faisant office de commande de crochet-commutateur. Le retrait du bloc d'adaptation 25 de la borne fixe 1 débranche le combiné 2 de la source d'alimentation générale 30 et remet à la position de repos la touche 16 ce qui ordonne à l'unité 3 une libération de la ligne $L_1L_2$ via l'enroulement 171 du relais 17.

Comme montré également à la Fig. 4, des touches capacitives 180 du clavier 18 et, de préférence, un afficheur à cristaux liquides 181 relié à l'unité 3 et destiné à afficher les numéros composés affleurent la paroi précitée de la borne 1. La paroi verticale apparente de la borne 1 n'offre ainsi aucune aspérité et aucun orifice pouvant susciter une quelconque dégradation de la borne 1.

## Revendications

1 Appareil téléphonique comprenant une borne fixe (1) reliée à une ligne téléphonique ($L_1L_2$) et un combiné téléphonique (2), la borne fixe comprenant des premiers moyens de modulation (5) et le combiné comprenant des premiers moyens de démodulation (8) pour transmettre des premiers signaux à audiofréquence de la ligne téléphonique vers un écouteur (20) du combiné, et le combiné comprenant des seconds moyens de modulation (9) et la borne fixe comprenant des seconds moyens de démodulation (6) pour transmettre des seconds signaux à audiofréquence d'un microphone (21) du combiné vers la ligne téléphonique, caractérisé en ce que les premiers moyens de modulation (5) et les premiers moyens de démodulation (8) sont reliés par des premiers moyens de couplage magnétique à basse fréquence (52, 80), et les seconds moyens de modulation (9) et les seconds moyens de démodulation (6) sont reliés par des seconds moyens de couplage magnétique à basse fréquence (94, 60).

2 Appareil téléphonique conforme à la revendication 1, caractérisé en ce que la borne fixe (1) comprend des moyens (4) pour transmettre une tension d'alimentation continue au combiné (2) à partir d'une source d'alimentation (30) de la borne, et en ce que le combiné (2) comprend des moyens (7) alimentant les premiers moyens de démodulation (8) et les seconds moyens de modulacion (9) pour récupérer ladite tension d'alimentation continue, et en ce que les moyens pour transmettre et récupérer ladite tension d'alimentation (4, 7) sont reliés par des troisièmes moyens de couplage magnétique à basse fréquence (42, 70).

3 Appareil téléphonique conforme à la revendication 2, caractérisé en ce que les moyens pour transmettre ladite tension d'alimentation (4) comprennent des moyens (40) pour délivrer une porteuse à basse fréquence modulée par ladite tension continue suivis de préférence par un amplificateur (41), et en ce que les moyens pour récupérer ladite tension d'alimentation (7) comprennent des moyens (71) pour détecter ladite tension continue à partir de la porteuse modulée, suivis par des moyens capacitifs (72).

4 Appareil téléphonique conforme à l'une quelconque des revendications 1 à 3, caractérisé en ce que chacun des moyens de couplage comprend une bobine de couplage (52 ; 60 ; 42) disposée derrière une face isolante de la borne fixe (1) et une bobine de couplage (80 ; 94 ; 70) disposée dans un bloc d'adaptation (25) relié au combiné (2) par un cordon flexible de fils de liaison (26) et applicable contre la borne fixe (1).

5 Appareil téléphonique conforme à la revendication 4, caractérisé en ce que le bloc d'adaptation (25) est maintenu appliqué contre la borne fixe (1) par un élément magnétique (27) contenu dans le bloc d'adaptation (25) coopérant avec un aimant ou un électro-aimant (160) contenu dans la borne fixe.

6 Appareil téléphonique conforme à l'une quelconque des revendications 1 à 5, caractérisé en ce que la borne fixe (1) comprend une touche à contact (16) pour demander sélectivement une prise et une libération de la ligne téléphonique ($L_1L_2$) à travers des contacts (11) insérés dans la ligne.

7 Appareil téléphonique conforme aux revendications 4 et 6, caractérisé en ce que ladite touche (16) est enfoncée lorsque le bloc d'adaptation (25) est appliqué contre la borne fixe (1) en vue de prendre la ligne téléphonique.

8 Appareil téléphonique conforme à la revendication 2 et à la revendication 6 ou 7, caractérisé en ce que la borne fixe (1) comprend des moyens (3, 17) pour commander la prise de la ligne téléphonique ($L_1L_2$) en réponse à un enfoncement de ladite touche (16) et à un signal (32) délivré par les seconds moyens de démodulation (6) indiquant une téléalimentation du combiné (2) par la borne fixe (1) à travers les troisièmes moyens de couplage (42, 70).

9 Appareil téléphonique conforme à l'une quelconque des revendications 1 à 8, caractérisé en ce que la borne fixe (1) comprend des moyens (19, 3, 17) pour libérer la ligne téléphonique ($L_1L_2$) en réponse à une impulsion de taxe transmise à travers la ligne téléphonique ($L_1L_2$) vers la borne fixe (1).

**Patentansprüche**

1. Fernsprechgerät umfassend einen mit einer Fernsprechleitung ($L_1L_2$) verbundenen festen Anschluß (1) und einen Handapparat (2), wobei der feste Anschluß erste Modulationsmittel (5) umfaßt und der Handapparat erste Demodulationsmittel (8) umfaßt, um erste Signale mit Tonfrequenz von der Fernsprechleitung zu einem Hörer (20) des Handapparats zu übertragen, und der Handapparat zweite Modulationsmittel (9) umfaßt und der feste Anschluß zweite Demodulationsmittel (6) umfaßt, um zweite Signale mit Tonfrequenz von einem Mikrofon (21) des Handapparats zu der Fernsprechleitung zu übertragen, dadurch gekennzeichnet, daß die ersten Modulationsmittel (5) und die ersten Demodulationsmittel (8) durch erste magnetische Kopplungsmittel (52, 80) mit niedriger Frequenz verbunden sind und die zweiten Modulationsmittel (9) und die zweiten Demodulationsmittel (6) durch zweite magnetische Kopplungsmittel (94, 60) mit niedriger Frequenz verbunden sind.

2. Fernsprechapparat nach Anspruch 1, dadurch gekennzeichnet, daß der feste Anschluß (1) Mittel (4) zur Übertragung einer Versorgungsgleichspannung zum Handapparat (2) ausgehend von einer Versorgungsquelle (30) des Anschlusses umfaßt und daß der Handapparat (2) Mittel (7) umfaßt, die die ersten Demodulationsmittel (8) und die zweiten Modulationsmittel (9) versorgen, um die Versorgungsgleichspannung zurückzugewinnen, und daß die Mittel (4, 7) zum Übertragen und Zurückzugewinnen der Versorgungsspannung durch dritte Mittel (42, 70) zur magnetischen Kopplung mit niedriger Frequenz verbunden sind.

3. Fernsprechapparat nach Anspruch 2, dadurch gekennzeichnet, daß die Mittel (4) zur Übertragung der Versorgungsspannung Mittel (40) umfassen, um eine Trägerwelle mit niedriger Frequenz, moduliert durch die Gleichspannung, abzugeben, vorzugsweise gefolgt von einem Verstärker (41), und daß die Mittel (7) zur Zurückgewinnung der Versorgungsspannung Mittel (71) zum Erfassen der Gleichspannung ausgehend von der modulierten Trägerwelle umfassen, gefolgt von kapazitiven Mitteln (72).

4. Fernsprechapparat nach einem beliebigen der Ansprüche 1 bis 3, dadurch gekennzeichnet, daß jedes der Kopplungsmittel eine hinter einer isolierenden Seite des festen Anschlusses (1) angeordnete Koppelspule (52; 60; 42) und eine Koppelspule (80; 94; 70) umfaßt, die in einem Anpaßblock (25) angeordnet ist, der durch eine flexible Leitung (26) von Verbindungsdrähten verbunden ist und gegen den festen Anschluß (1) aufgesetzt ist.

5. Fernsprechapparat nach Anspruch 4, dadurch gekennzeichnet, daß der Anpaßblock (25) gegen den festen Anschluß (1) durch ein Magnetelement (27) aufgesetzt ist, das im Anpaßblock (25) enthalten ist, zusammenwirkend mit einem im festen Anschluß enthaltenen Magneten oder Elektromagneten (160).

6. Fernsprechapparat nach einem beliebigen der Ansprüche 1 bis 5, dadurch gekennzeichnet, daß der feste Anschluß (1) eine Kontakttaste (16) umfaßt, um selektiv einen Abgriff und eine Freigabe der Fernsprechleitung ($L_1L_2$) über die in die Leitung eingebauten Kontakte (11) zu fordern.

7. Fernsprechapparat nach den Ansprüchen 4 und 6, dadurch gekennzeichnet, daß die Taste (16) eingedrückt ist, wenn der Anpaßblock (25) gegen den festen Anschluß (1) zwecks Nehmens der Fernsprechleitung aufgesetzt ist.

8. Fernsprechapparat nach Anspruch 2 und nach Anspruch 6 oder 7, dadurch gekennzeichnet, daß der feste Anschluß (1) Mittel (3, 17) umfaßt, um das Nehmen der Fernsprechleitung ($L_1L_2$) in Reaktion auf ein Drücken der Taste (16) und auf ein durch die zweiten Demodulationsmittel (6) abgegebenes Signal (32) zu befehlen, das eine Fernversorgung des Handapparats (2) durch den festen Anschluß (1) über die dritten Kopplungsmittel (42, 70) anzeigt.

9. Fernsprechapparat nach einem beliebigen der Ansprüche 1 bis 8, dadurch gekennzeichnet, daß der feste Anschluß (1) Mittel (19, 3, 17) umfaßt, um die Fernsprechleitung ($L_1L_2$) in Reaktion auf einen über die Fernsprechleitung ($L_1L_2$) zum festen Anschluß (1) übertragenen Gebührenimpuls freizugeben.

**Claims**

1. Telephone apparatus comprising a fixed station (1) connected to a telephone line ($L_1L_2$) and a telephone handset (2), the fixed station comprising first modulating means (5) and the handset comprising first demodulating means (8) for transmitting first audiofrequency signals from the telephone line to an earphone (20) of the handset, and the handset comprising second modulating means (9) and the fixed station comprising second demodulating means (6) for transmitting second audiofrequency signals from a microphone (21) of the handset to the telephone line, characterized in that the first modulating means (5) and the first demodulating means (8) are linkable through first low-frequency. magnetic coupling. means (52, 80), and the second modulating means (9) and the second demodulating means (6) are linkable through second low-frequency magnetic coupling means (94, 60).

2. Telephone apparatus according to claim 1, characterized in that the fixed station (1) comprises means (4) for transmitting a DC power supply voltage to the handset (2) from a power supply source (3) in the station, and in that the handset (2) comprises means (7) supplying the first demodulating means (8) and the second modulating means (9) for recovering said DC power supply voltage, and in that the supply voltage transmitting and recovering means (4, 7) are linkable by third low-frequency magnetic coupling means (42, 70).

3. Telephone apparatus according to claim 2, characterized in that the supply voltage transmitting means (4) comprise means (40) for delivering a low-frequency carrier modulated by said DC supply voltage, preferably followed by an amplifier (41), and in that the supply voltage recovering means (7) comprise means (71) followed by capacitve means (72) for detecting said DC voltage from the modulated carrier.

4. Telephone apparatus according to any one of claims 1 to 3, characterized in that each of the coupling means comprises a coupling coil (52 ; 60; 42) located behind an insulating face in the fixed station (1), and a coupling coil (80 ; 94 ; 70) located in an adaptor unit (25) linked to the handset (2) by a flexible connection wire cord (26), and applicable against the fixed station (1).

5. Telephone apparatus according to claim 4, characterized in that the adaptor unit (25) is held applied against the fixed station (1) by a magnetic member (27) contained in the adaptor unit (25) working together with a magnet or an electromagnet (160) contained in the fixed station.

6. Telephone apparatus according to any one of claims 1 to 5, characterized in that the fixed station (1) comprises a contact pushbutton (16) for selectively requesting a seizure and a release of the telephone line ($L_1L_2$) via contacts (11) inserted in the line.

7. Telephone apparatus according to claims 4 and 6, characterized in that the pushbutton (16) is pressed in when the adaptor unit (25) is applied against the fixed station (1) with a view to seizing the telephone line.

8. Telephone apparatus according to claim 2 and to claims 6 or 7, characterized in that the fixed station (1) comprises means (3, 17) for ordering the seizure of the telephone line ($L_1L_2$) in response to the pushbutton (16) being pressed in and in response to a signal (32) delivered by the second demodulating means (6) and indicating a remote supplying of the handset (2) from the fixed station (1) through the third coupling means (42, 70).

9. Telephone apparatus according to any one of claims 1 to 8, characterized in that the fixed station (1) comprises means (19, 3, 17) for releasing the telephone line ($L_1L_2$) in response to a charge pulse transmitted through the telephone line ($L_1L_2$) to the fixed station (1).

FIG.1

EP 0 193 470 B1

# FIG.2

ligne téléphonique

CIRCUIT DE MODULATION D'AMPLITUDE 5

CIRCUIT DE REGULATION DE TENSION 39

CIRCUIT DE DEMODULATION D'AMPLITUDE 6

CIRCUIT DE PREREGULATION DE TENSION 38

CIRCUIT DE TELEALIMENTATION 4

présence combiné

SOURCE D'ALIMENTATION

# FIG. 3

COMBINÉ TELEPHONIQUE 2

CIRCUIT DE DEMODULATION
D' AMPLITUDE 8

CIRCUIT DE MODULATION D'AMPLITUDE 9

CIRCUIT D'ALIMENTATION 7

# FIG. 4